# EUROPEAN PATENT SPECIFICATION

(11) **EP 0 464 329 B1**
(45) Date of publication and mention of the grant of the patent: **13.12.1995**
(21) Application number: 91106119.0
(22) Date of filing: 17.04.1991
(51) Int. Cl.: H04N 11/16

(54) **Color signal demodulating circuit**
Farbsignaldemodulationsschaltung
Circuit de démodulation de signal en couleurs

(30) Priority: 30.06.1990 KR 964990 U
(43) Date of publication of application: 08.01.1992
(73) Proprietor: SAMSUNG ELECTRONICS CO. LTD., Suwon, Kyunggi-do (KR)
(72) Inventor: Kim, Sun-tae, Kumi-city, Kyungsangbuk-do (KR)
(74) Representative: WILHELMS, KILIAN & PARTNER Patentanwälte

(56) References cited:
- GB-A- 2 044 577
- US-A- 4 300 155
- WIRELESS WORLD. vol. 90, no. 1576, January 1984, HAYWARDS HEATH GB pages 52 - 56; READ: "Improving colour television decoding"

## Description

This invention relates to a color signal demodulating circuit for the PAL system as stated in the preamble of the patent claim having simple structure of circuit. Such a demodulating circuit is known from the GB-A-2 044 577.

Color television systems are classified into the NTSC (National Television System Committee) system, the PAL (Phase Alternatation by Lines) system and the SECAM (Sequentiel Couleur A Memoire )according to the difference particularly in the transmission process of color difference signal and in the multiplexity of color difference signal and luminance signal. The PAL system adopts a modulation system in which signal R-Y among two color difference signals of R-Y and B-Y is modulated by inverting its phase every other scanning line. The color burst signal used in the PAL system shifts its phase ± 45° about the zero phase reference at the back porch of the horizontal synchronization pulse on alternate lines to be multiplexed. This phase-alternate color burst signal is for the receiver not only to utilize as color burst signals, but to distinguish between color difference signals R-Y and - (R-Y) according to the phase difference between +45° and -45° color burst signals.

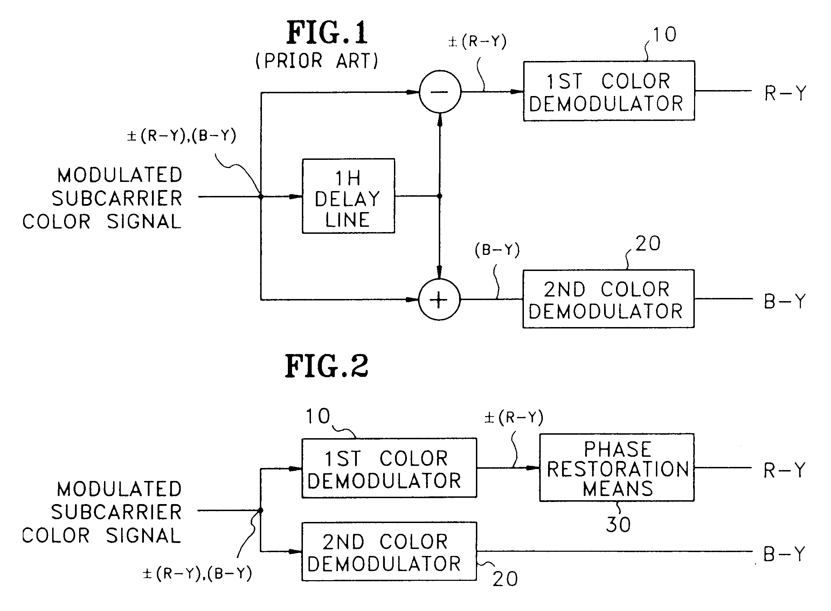

From the US-A-4 300 155 a PAL system is known with which, the modulated subcarrier color signal is delayed by 1H delay line, wherein the unit "H" is determined by the 15.734KHz horizontal sync frequency standard and equivalent to approximately 63.5»s. As shown in Fig. 1 of the drawings the delayed signal is added to the modulated subcarrier color signal by an adder. At the same time, the delayed signal is subtracted from the modulated subcarrier color signal by a subtractor. As a result, the adder produces a B-Y modulated signal and the subtracting circuit produces ±(R-Y)subcarrier signals. The two subcarrier color signals produced as above are supplied to a first color demodulator 10 and a second color demodulator 20, respectively. Accordingly, two color difference signals are obtained.

This conventional system, however has problems such as a complexity of 1H delay line circuit structure and errors occurred in color difference signals if the 1H delay line loses fineness.

It is an object of the present invention to provide a color signal demodulation circuit for the PAL system having a simplified structure.

The above-mentioned object is obtained by the construction stated in the characterizing part of the patent claim.

The present invention is described in detail by reference to the accompanying drawings.

FIG. 1 is a circuit diagram showing a conventional color demodulating circuit of the PAL system.

FIG. 2 illustrates a color demodulating circuit for the PAL system according to the present invention

FIG. 3 is a circuit diagram of a preferred embodiment of the phase restoration means as illustrated in FIG. 2

FIG. 4 is a waveform chart illustrating waveforms at each stage in FIG. 3

Referring to FIG. 2, this invention mainly comprises a first demodulator 10 for generating color difference signals ±(R-Y), a second demodulator 20 for generating a color difference signal B-Y and a phase restoration means 30 for generating color signal R-Y.

The first demodulator 10 which produces color difference signals ±(R-Y) by demodulating the modulated subcarrier color signals input is known to someone skilled in the art.

The second demodulator 20 which generates color difference signal B-Y by demodulating the modulated subcarrier color signals input is also known to someone skilled in the art.

The phase restoration means 30 generates a color difference signal R-Y in the manner that color difference signals ±(R-Y) supplied from the first demodulator 10 are amplified in an inverted or non-inverted state, the inverted and non-inverted amplified signals are alternatively selected in accordance with a switching control pulse of which the initial state is determined by each of the phases of color burst signals in the modulated subcarrier color signal.

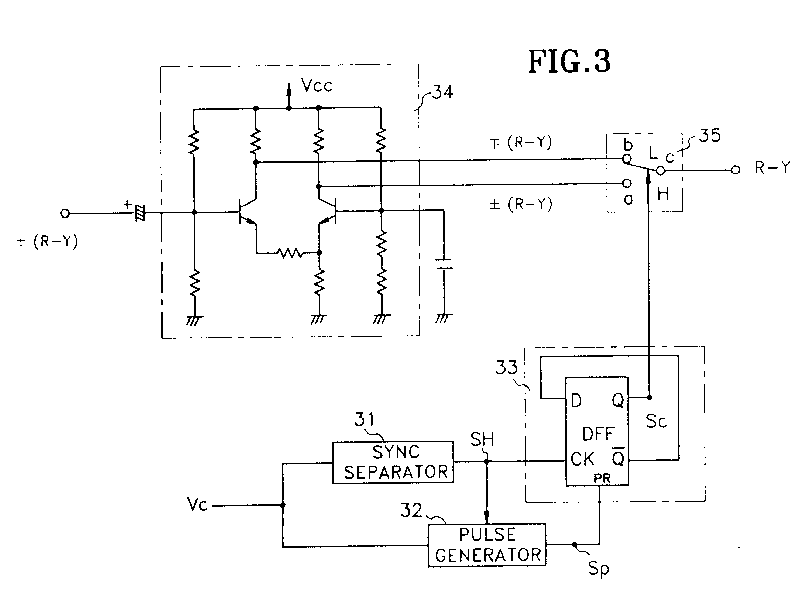

A preferred embodiment of phase restoration means 30 is described with reference to FIG.3 as follows.

As shown in FIG 3, the synchronization (referred to as sync, hereinafter) separator 31 of the phase restoration means 30 receives a composite signal and produces a horizontal sync signal SH. Meanwhile, a pulse generator 32 extracts only color burst signal out of the modulated subcarrier color signal according to the color burst gate signal which delays the horizontal sync signal SH to the position of the color burst signal, and generates a line shifting pulse Sp by producing "High" signal at +45° phase and "Low" signal at -45° phase.

A control pulse generator 33 produces a switching control signal Sc using a flip-flop in the manner that the above mentioned line shifting pulse Sp is supplied to the preset input terminal PR of a D-type flip-flop DFF in order to determine the initial state of the switching control signal and the horizontal sync signal SH is received to a clock input terminal CK and a negative output terminal Q̅ is connected to a data input terminal D, so that a positive output terminal Q generates the switching control signal Sc.

The differential amplifier 34 amplifies color difference signals ±(R-Y) supplied from the first color demodulator 10 and outputs the non-inverted and inverted amplified signals.

The non-inverted and inverted amplified signals as described above are connected to input terminals a and b of the changeover switch 35 respectively. The switch 35 selectively connects input terminal a and b to an output terminal c according to the switching control signal Sc generated by the control pulse generator 33 in the manner that input terminal a is connected to output terminal c during a "High" position of the switching control signal Sc and input terminal b to output terminal c during a "Low" position.

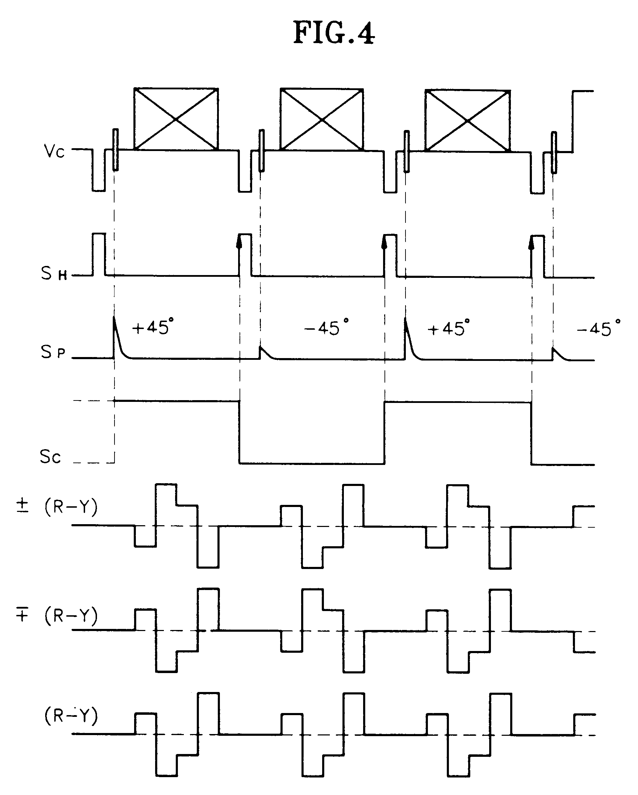

Accordingly the composite video signal Vc, as shown in the waveforms chart of FIG 4, is provided to the sync separator 31, which then produces the horizontal sync signal SH and is also provided to the pulse generator 32, which then generates the line shifting pulse Sp, i.e., "High" signal at +45 phase of the color burst signal and "Low" signal at -45 phase of the color burst signal.

The D-type flip-flop DFF contained in the control pulse generator 33 is preset by the "High" signal of the line shifting pulse Sp to determine its initial stage to be a high state at the positive output terminal Q and a Low state at the negative output terminal Q̅.

Being toggled at every rising edge of the horizontal sync signal SH, the D-type flip-flop DFF generates the switching control signal Sc wherein the output Q of the flip-flop is inverted by every horizontal line. Subsequently, the switching control signal Sc is in a High state at +45° color burst signal and in a Low state at -45° color burst signal.

Meanwhile, the first color demodulator 10 supplies the demodulated color difference signals ±(R-Y) to the differential amplifier 34 which then amplifies the color difference signals ±(R-Y) in a non-inverted and inverted states. Accordingly, non-inverted color difference signals ±(R-Y) are supplied to the input terminal a of the switch 35, while inverted color difference signals ∓(R-Y) to the input terminal b. The switch 35 connects input terminal a with output terminal c at a high period of the switching control signal Sc so as to output the color signal +(R-Y) and input terminal b with output terminal c at low period also to output the color signal +(R-Y). As a result, only the color difference signal +(R-Y) is provided at output terminal c of the switch 35.

As described above, since a color difference signal R-Y of PAL system is extracted from the demodulated color difference signals ±(R-Y) by utilizing a differential amplifier , a switch, a sync separator and a line shifting pulse generator, the color signal demodulating circuit according to the present invention has a very practical advantage in that the performance is more developed and the structure of circuit is simpler than that of the conventional PAL system which adopts the 1H delay line, the adder and the subtractor.

## Claims

1. A color demodulating circuit for the PAL system comprising:
a first color demodulator (10) for receiving a modulated subcarrier color signal and demodulating it, so as to produce first color difference signals ± (R - Y);
a second color demodulator (20) for receiving said modulated subcarrier color signal and demodulating it, so as to produce a second color difference signal B - Y; and
phase restoration means (30) for amplifying the first color difference signals ± (R - Y) having non-inverting and inverting states and generating a color difference signal R - Y by selectively switching said non-inverted and inverted first color difference signals ± (R - Y) according to a switching control signal of which the initial state is determined pursuant to each of the phases of the color burst signals of the modulated subcarrier color signal,
characterized in that said phase restoration means (30) comprises a differential amplifier (34) for phase-splitting and amplifying which receives said first color difference signals ± (R - Y) from said first color demodulator (10) and produces color difference signals having a phase relationship inverted with respect to each other;
a sync separator (31) for separating a horizontal sync signal from a composite video signal and outputting it;
a pulse generator (32) for generating a high signal or a low signal pursuant to said horizontal sync signal from said sync separator (31) and to the phases of the color burst signals extracted from said composite video signal;
a D-type flip-flop (DFF) which is preset according to the output signal of said pulse generator (32) and produces a switching control signal by receiving the horizontal sync signal from said sync separator (31) as a clock pulse; and
switching means (35) for generating the color difference signal R - Y by selectively choosing one output of the two outputs from said differential amplifier (34) in accordance with said switching control signal supplied from said D-type flip-flop (DFF).

## Patentansprüche

1. Farbdemodulationsschaltung für das PAL System mit
einem ersten Farbdemodulator (10) zum Empfangen eines modulierten Zwischenträgerfarbsignals und zum Demodulieren dieses Signals, um erste Farbdifferenzsignale ± (R - Y) zu erzeugen,
einem zweiten Farbdemodulator (20) zum Empfangen des modulierten Zwischenträgerfarbsignals und zum Demodulieren dieses Signals, um ein zweites Farbdifferenzsignal B - Y zu erzeugen, und
Phasenrückstelleinrichtungen (30) zum Verstärken der ersten Farbdifferenzsignale ± (R - Y) mit einem nicht invertierenden und einem invertierenden Zustand und zum Erzeugen eines Farbdifferenzsignals R - Y durch wahlweises Umschalten der nicht invertierten und der invertierten ersten Farbdifferenzsignale ± (R - Y) nach Maßgabe eines Schaltsteuersignals, dessen Anfangszustand jeder der Phase der Farbsynchronsignale des modulierten Zwischenträgerfarbsignals folgend bestimmt ist,
dadurch gekennzeichnet, daß die Phasenrückstelleinrichtungen (30) einen Differentialverstärker (34) zur Phasenteilung und Verstärkung, der die ersten Farbdifferenzsignale ± (R - Y) vom ersten Farbdemodulator (10) empfängt und Farbdifferenzsignale mit einer zueinander umgekehrten Phasenbeziehung erzeugt,
einen Synchronseparator (31) zum Abtrennen eines Horizontalsynchronsignals vom Videosignalgemisch und zum Ausgeben dieses Signals,
einen Impulsgenerator (32) zum Erzeugen eines Hochpegelsignals oder eines Niederpegelssignals und zwar auf das Horizontalsynchronsignal vom Synchronseparator (31) und auf die Phasen der Farbsynchronsignale folgend, die vom Videosignalgemisch extrahiert werden,
eine D-Flip-Flop-Schaltung (DFF) die nach Maßgabe des Ausgangssignals des Impulsgenerators (32) vorgesetzt wird und ein Schaltsteuersignal dadurch erzeugt, daß sie das Horizontalsynchronsignal vom Synchronseparator (31) als Taktimpuls empfängt, und
Schalteinrichtungen (35) zum Erzeugen des Farbdifferenzsignals R - Y durch selektives Wählen eines Ausgangssignals der beiden Ausgangssignale vom Differenzialverstärker (34) nach Maßgabe des Schaltsteuersignals, das von der D-Flip-Flop-Schaltung (DFF) kommt, umfassen.

## Revendications

1. Un circuit démodulateur couleur destiné au système PAL comprenant:
un premier démodulateur couleur (10) destiné à recevoir un signal modulé en couleur de sous-porteuses et à le démoduler de façon à produire des premiers signaux de différence couleur ± (R - Y);
un deuxième démodulateur couleur (20) pour recevoir ledit signal modulé couleur de sous-porteuse et à le démoduler, de façon à produire un deuxième signal de différence couleur B - Y; et
un moyen de restauration (30) de phase pour amplifier les premiers signaux de différence couleur ± (R - Y) qui présentent des états sans inversion et avec inversion et à engendrer un signal de différence couleur R - Y en commutant sélectivement lesdits premiers signaux, sans inversion et avec inversion, de différence couleur ± (R - Y) en fonction d'un signal de commande de commutation dont l'état initial est déterminé en fonction de chacune des phases des signaux de chrominance du signal modulé couleur de sous-porteuse,
caractérisé en ce que ledit moyen de restauration (30) de phase comprend un amplificateur différentiel destiné à diviser déphaser et à amplifier, qui reçoit dudit premier démodulateur couleur (10) lesdits premiers signaux de différence couleur ± (R - Y) et qui produit des signaux de différence couleur qui présentent une relation de phase inversée l'un par rapport à l'autre;
un séparateur (31) de signal de synchronisation, ou séparateur de sync, pour séparer d'un signal vidéo composite un signal de synchronisation horizontale et le produire;
un générateur (32) d'impulsions pour engendrer un signal haut ou un signal bas en fonction dudit signal de synchronisation horizontale, qui vient dudit séparateur (31) de signal de synchronisation, et des phases des signaux de chrominance extraits dudit signal vidéo composite;
une bascule de type D (DFF) qui est préétablie en fonction du signal de sortie dudit générateur (32) d'impulsions et produit un signal de commande de commutation en recevant dudit séparateur (31) de signal de synchronisation, en tant qu'impulsion de signal d'horloge, ledit signal de synchronisation horizontale; et
un moyen commutateur (35) pour engendrer le signal de différence couleur R - Y en choisissant sélectivement, en fonction dudit signal de commande de commutation fourni par ladite bascule de type D (DFF), une sortie parmi les deux sorties dudit amplificateur différentiel (34).
